Europäisches Patentamt

European Patent Office

Office européen des brevets

(11) Publication number: **0 179 291**
**B1**

## EUROPEAN PATENT SPECIFICATION

(45) Date of publication of patent specification: **17.01.90**

(51) Int. Cl.⁵: **H 04 N 1/411**

(21) Application number: **85112091.5**

(22) Date of filing: **24.09.85**

(54) Pre-processing of bi-level image data.

(30) Priority: **24.10.84 JP 222292/84**

(43) Date of publication of application:
**30.04.86 Bulletin 86/18**

(45) Publication of the grant of the patent:
**17.01.90 Bulletin 90/03**

(84) Designated Contracting States:
**DE FR GB IT**

(56) References cited:
**DE-A-2 450 073**
**US-A-4 229 768**
**US-A-4 291 339**

(73) Proprietor: **International Business Machines**
**Corporation**
**Old Orchard Road**
**Armonk, N.Y. 10504 (US)**

(72) Inventor: **Asano, Hideo**
**353-5 Ohkura-cho**
**Machida-shi Tokyo (JP)**
Inventor: **Kanzaki, Eisuke**
**B-101 Watauchi Heights 283-6 Watauchi**
**Fujisawa-shi Kanagawa-ken (JP)**
Inventor: **Shimizu, Yutaka**
**8-303 Komayose-danchi 5450 Ohba**
**Fujisawa-shi Kanagawa-ken (JP)**

(74) Representative: **Barth, Carl Otto et al**
**IBM Deutschland GmbH Patentabteilung**
**Schönaicher Strasse 220**
**D-7030 Böblingen (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 179 291 B1

# EP 0 179 291 B1

## Description

### Field of the Invention

The invention relates to a method and an apparatus for processing bi-level image data which are supplied from an image data supply means, such as an image scanner, before the supply of the bi-level image data to a data compressor.

### Prior Art

NIKKEI ELECTRONICS November 3, 1975, pp. 30—34 describes a pre-process of image data which is adaptable to a run-length coding. In the article, black image data and white image data of a reference line and a coding line (current PEL or scan line) are so re-arranged that the black image data, i.e. black bits, are grouped into a left half of a new line and the white image data, i.e. white bits, are grouped into a right half of the new line. The left half is called an A1 sequence and the right half is called the A2 sequence. And, a new, unconventional coding scheme for adapting the A1 and A2 sequence is further required.

Although the article relates to a pre-processing of bi-level image data, the detail of the process for the re-arrangement of the image data of the article differs essentially from that of the present invention.

US—A—4 229 768 relates to the pre-processing of binary image data supplied from an image supply means in preparation for compression. The patent deals with a method for eliminating isolated spots in the image data which are considered as noise. Furthermore, the patent teaches a smoothing process to avoid quantizing errors when scanning boundaries between black and white areas. Transitions between black and white areas are detected and the distances between left end transitions or right end transitions in subsequent lines are changed to achieve smoothing by way of an alignment of transitions.

As the distances are not compared to ranges which have been predefined with the purpose to facilitate the subsequent compression, the pre-processing scheme described in this patent lacks flexibility. Although it allows a better representation of scanned image details of special shapes, it does not essentially and generally contribute to a facilitated compression and to an essential reduction of compression data to be transmitted.

It is, therefore, an object of the present invention to propose a method and an apparatus for pre-processing binary image data to allow an improved compression of such data.

The method and the apparatus of the present invention are respectively defined in claims 1 and 7.

The improved compression according to the present invention is achieved by a selective processing of distances of transitions between black and white areas, in subsequent scanned lines. By putting the distances in relation to the boundaries of a predetermined range the distances can be reduced in a flexible way. For an appropriate choice of the boundaries of the range the compression coding scheme is taken into consideration.

### Brief Description of the Drawings

Fig. 1 shows an operational flow chart of the pre-process in accordance with an embodiment of the present invention.

Fig. 2 shows an example of the two-dimensional coding scheme.

Table 1
T.4 Two-dimensional code table

| Mode | Elements to be coded | | Notation | Code word |
|---|---|---|---|---|
| Pass | $b_1$, $b_2$ | | P | 0001 |
| Horizontal | $a_0a_1$, $a_1a_2$ | | H | $001+M(a_0a_1)+M(a_1a_2)$ |
| Vertical | $a_1$ just under $b_1$ | $a_1b_1 = 0$ | V(0) | 1 |
| | $a_1$ to the right of $b_1$ | $a_1b_1 = 1$ | $V_R(1)$ | 011 |
| | | $a_1b_1 = 2$ | $V_R(2)$ | 000011 |
| | | $a_1b_1 = 3$ | $V_R(3)$ | 0000011 |
| | $a_1$ to the left of $b_1$ | $a_1b_1 = 1$ | $V_L(1)$ | 010 |
| | | $a_1b_1 = 2$ | $V_L(2)$ | 000010 |
| | | $a_1b_1 = 3$ | $V_L(3)$ | 0000010 |
| Extension | | 2-D (extensions) | | 0000001xxx |
| | | 1-D (extensions) | | 000000001xxx |

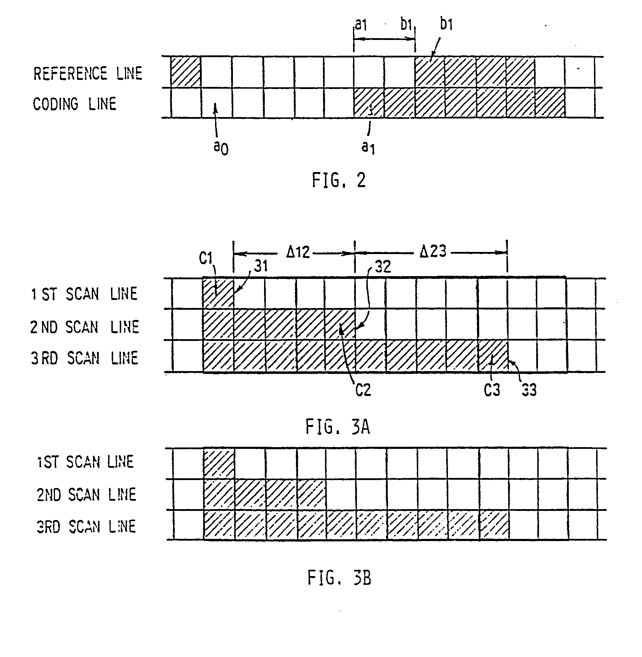

Referring to Fig. 2, an exemplary pattern is shown for describing the coding scheme wherein the pel (picture element) "$a_0$" represents the reference or starting element on the coding line, the "$a_1$" represents the next changing element to the right of $a_0$ on the coding line, and the "$b_1$" represents the first changing element on the reference line to the right of $a_0$ and of opposite colour to $a_0$. As apparent from Table 1, the code words for $|a_1b_1| \leq 3$ are of relatively short length.

Describing the basic concept of a first embodiment of the present invention with reference to Figs. 3A through 6D, the invention detects a changing element $C_1$ in a first scan line, a changing element $C_2$ in a second scan line and a changing element $C_3$ in a third scan line.

Figs. 3A—B, 4A—D, 5A—D 6A—D show patterns which are pre-processed in accordance with the present invention, and

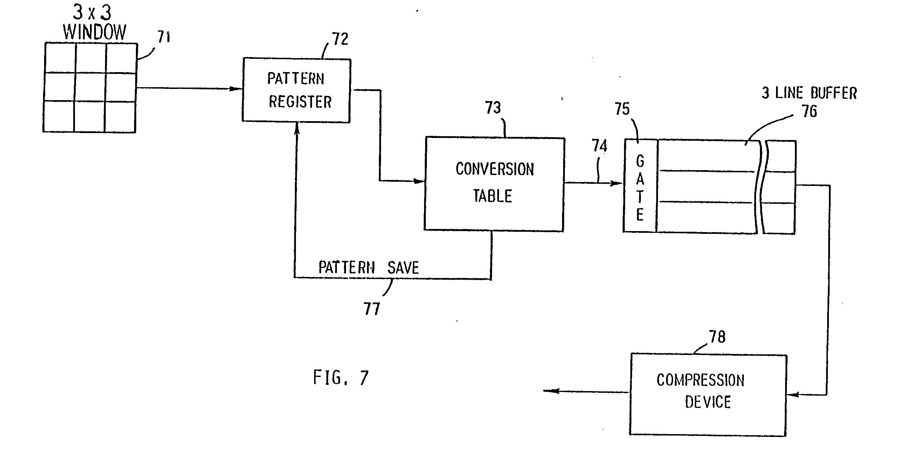

Fig. 7 shows a circuit block diagram for performing the pre-process in accordance with the present invention.

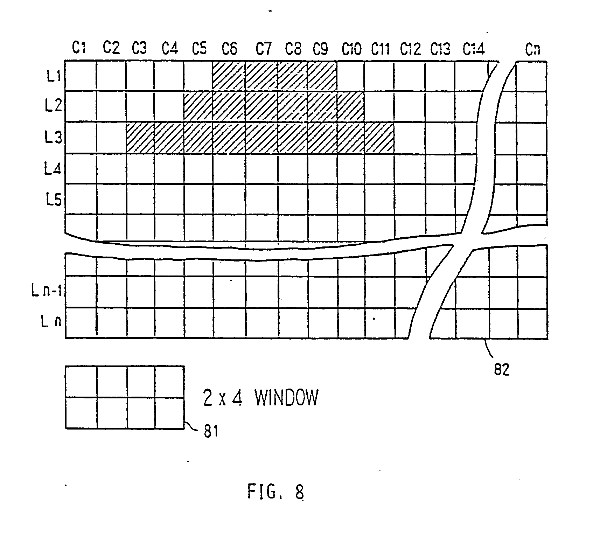

Fig. 8 shows an example of an original image used for the description of a second embodiment of the present invention.

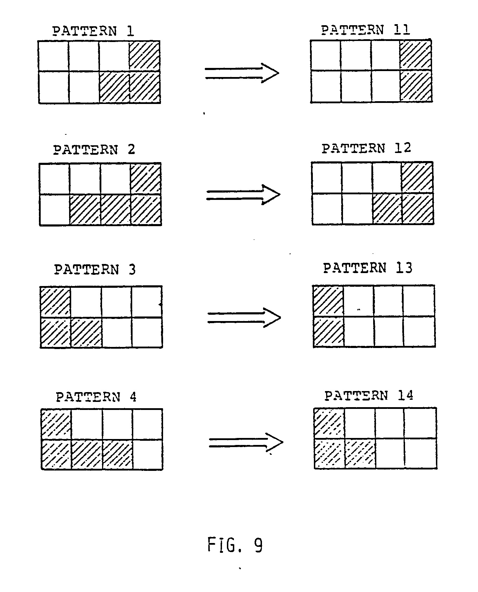

Fig. 9 shows patterns which are pre-processed in the second embodiment of the present invention, and

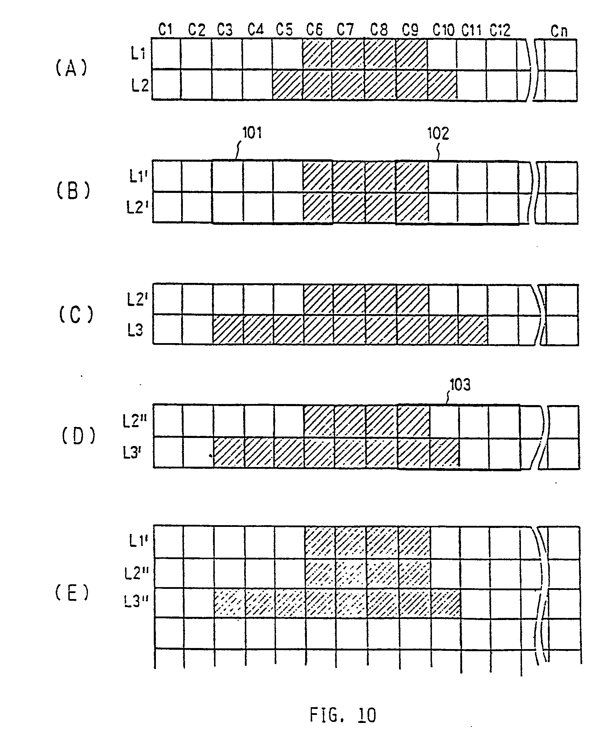

Fig. 10 shows the pre-process operation in the second embodiment of the present invention.

·Descripton of First Embodiment

The invention performs a pre-process of bi-level image data to reduce the amount of compressed data, which are compressed under a conventional two-dimensional coding scheme, such as provided by the CCITT Recommendation T.4.

3

Before describing the first embodiment of the present invention, the two-dimensional coding scheme of the CCITT Recommendation T.4, as a typical coding scheme, is described hereinafter.

The following Table 1 shows the two-dimensional code table of the CCITT Recommendation T.4. ·

It is noted that:

— in the case that the first and second scan lines in the Figs. 3A, 4A, 4C, 5A, 5C, 6A and 6C correspond to the reference and coding lines in Fig. 2, respectively, the changing elements $C_1$ and $C_2$ correspond to "$b_1$" and "$a_1$", respectively, and

— in the case that the second and third scan lines in the Figs. 3A, 4A, 4C, 5A, 5C, 6A and 6C correspond to the reference and coding lines in Fig. 2, respectively, the changing elements $C_2$ and $C_3$ correspond to "$b_1$" and "$a_1$", respectively.

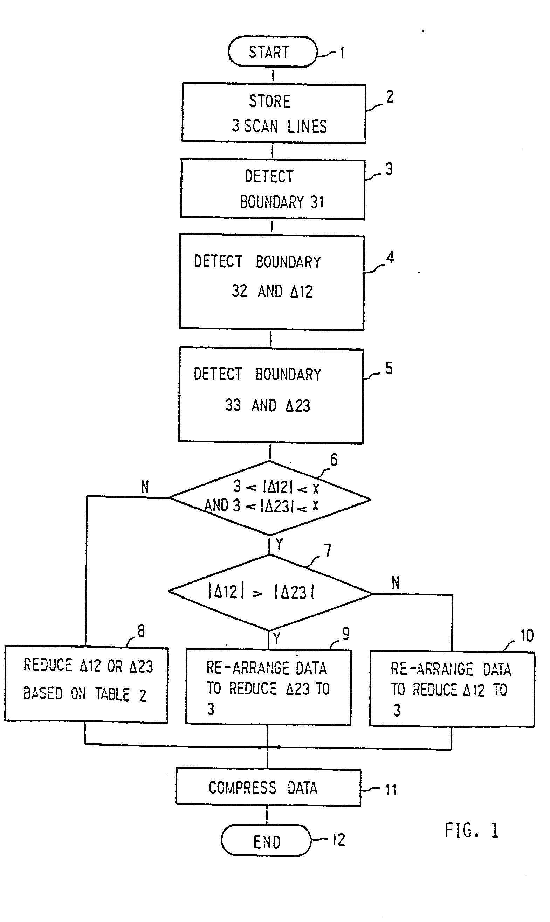

Next e.g. referring to Fig. 3A, the invention detects a first distance $\Delta_{12}$ between the changing element $C_1$ in the first scan line and the changing element $C_2$ in the second scan line, and also a second distance $\Delta_{23}$ between the changing element $C_2$ in the second scan line and the changing element $C_3$ in the third scan line. The above operation is shown in blocks 1 through 5 in Fig. 1. The operation starts at block 1. Block 2 stores three scan lines into a three line buffer not shown. Block 3 detects the boundary 31 between the changing element $C_1$ and the next white element. Block 4 detects the boundary 32 between the changing element $C_2$ and the next white element. The boundary 31 relates to the boundary 32. Also, block 4 detects the distance $\Delta_{12}$. Block 5 detects the boundary 33 which is related to the boundary 32. Also, block 5 detects the distance $\Delta_{23}$.

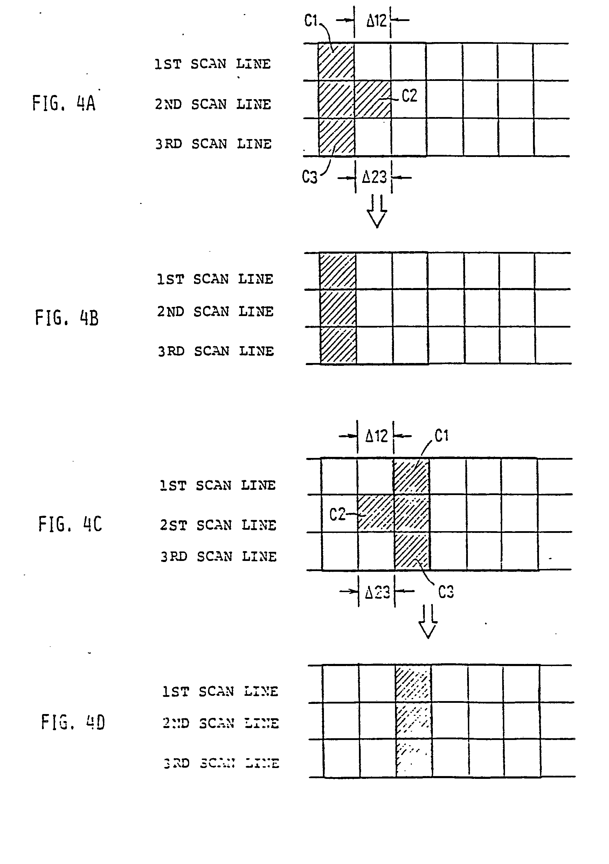

The operation proceeds to block 6. The block 6 determines whether the formula $3 < |\Delta_{12}| < x$ AND $3 < |\Delta_{23}| < x$ is satisfied, or not. As explained below the value of "X" is selected in accordance with the desired image fidelity. If $|\Delta_{12}| \leq 3$ or $|\Delta_{23}| \leq 3$, as is the case in the Figs. 4A, 4C, 5A, 5C, 6A and 6C, the answer of the block 6 is NO and the operation proceeds to block 8.

The distance $|\Delta_{12}|$ as well as $|\Delta_{23}|$ in the Figs. 4A, 4C, 5A, 5C, 6A and 6C corresponds to one of the cases $|a_1 b_1| = 1$, $|a_1 b_1| = 2$ and $|a_1 b_1| = 3$ shown in the Table 1. If the distance $|\Delta_{12}|$ or $|\Delta_{23}|$ corresponds to one of the three cases, the invention, at block 8, re-arranges or converts the original bit patterns or image data shown in the Figs. 4A, 4C, 5A, 5C, 6A and 6C to the bit patterns shown in Figs. 4B, 4D, 5B, 5C, 6B and 6D, respectively.

The next Table 2 shows the bit conversion performed in block 8.

**Table 2**

| Distance $\Delta_{12}$ or $\Delta_{23}$ | | New Distance | |
|---|---|---|---|
| 1 | → | 0 | (FIGS. 4A-4D) |
| 2 | → | 1 | (FIGS. 5A-5D) |
| 3 | → | 1 | (FIGS. 6A-6D) |

The reasons for performing the above conversions are:

(a) The numbers of bits of the code words for the cases $a_1 b_1 = 0$ and $a_1 b_1 = 1$ are "one bit" and "three bits", respectively, as shown in Table 1, while the number of bits of code words for the cases $a_1 b_1 = 2$ and $a_1 b_1 = 3$ are "six bits" and "seven bits"; and

(b) The above conversion of the distanc in accordance with the invention does not adversely affect the image fidelity of the original image data with a fine resolution, e.g., of 8 pels/mm. In other words, the original image is maintained even if the distance is converted.

The Figs. 4A through 6D will be described in more detail later on.

If the formula $3 < |\Delta_{12}| < x$ AND $3 < |\Delta_{23}| < x$ is satisfied, the operation proceeds to block 7 via the YES path. The value of x is selected in advance, in accordance with the image fidelity which one desires. In other words, the value x is the upper limit for doing the pre-process, i.e. for not necessarily keeping the original image information within the converted image data. In the exemplary case, the value of x is selected to be "6". Fig. 3A shows one case producing a YES from block 6, wherein the value of $\Delta_{12}$ is "4" and the value of $\Delta_{23}$ is "5". Then, block 7 determines if $|\Delta_{12}|$ is larger than $|\Delta_{23}|$. For the exemplary bit pattern shown in Fig. 3A, the block 7 produces a NO output, and the operation proceeds to block 10. Then the original image data of Fig. 3A is re-arranged to reduce the distance $\Delta_{12}$ to the value "3". The re-arranged image data is shown in Fig. 3B. It is noted that the total length of $\Delta_{12}$ and $\Delta_{23}$ in the original image data is maintained after the conversion, as it should be to keep the image fidelity of the original data.

When $|\Delta_{12}|$ is larger than $|\Delta_{23}|$, the YES output is produced, and the operation proceeds to block 9. NO example for the process including block 9 is shown in the figures. In block 9, $|\Delta_{23}|$ of the original bi-level image data is reduced to "3", but the total length of $|\Delta_{12}|$ and $|\Delta_{23}|$ in the original image data is maintained in the re-arranged image data.

4

As apparent from the above, the blocks 8, 9 and 10 re-arrange the original image data to selectively decrease the distance $\Delta_{12}$ and/or $\Delta_{23}$ to one of a number of predetermined distances in accordance with the result of the test blocks 6 and 7.

The re-arranged image data, i.e. the pre-processed image data, in accordance with the present invention, are supplied to the compression means which compresses the data under the two-dimensional coding scheme of Table 1, for example, as shown in block 11, and the operation terminates at block 12.

Now describing the Figs. 4A through 6D, the Figs. 4A and 4C, Figs. 5A and 5C and the Figs. 6A and 6C show the orignal image data, which is the bi-level image data from a CCD (charge-coupled devices) sensor array of the document or image scanning apparatus.

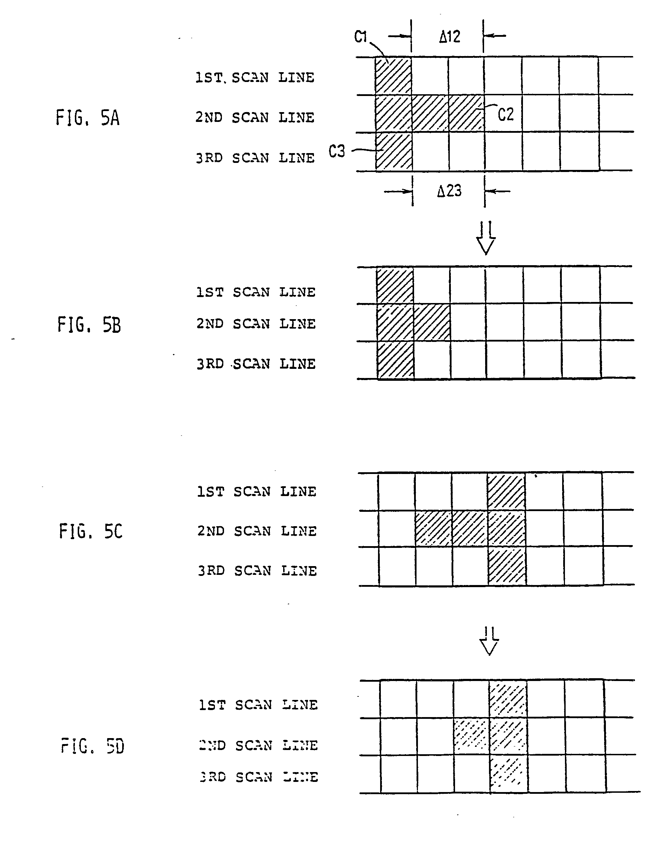

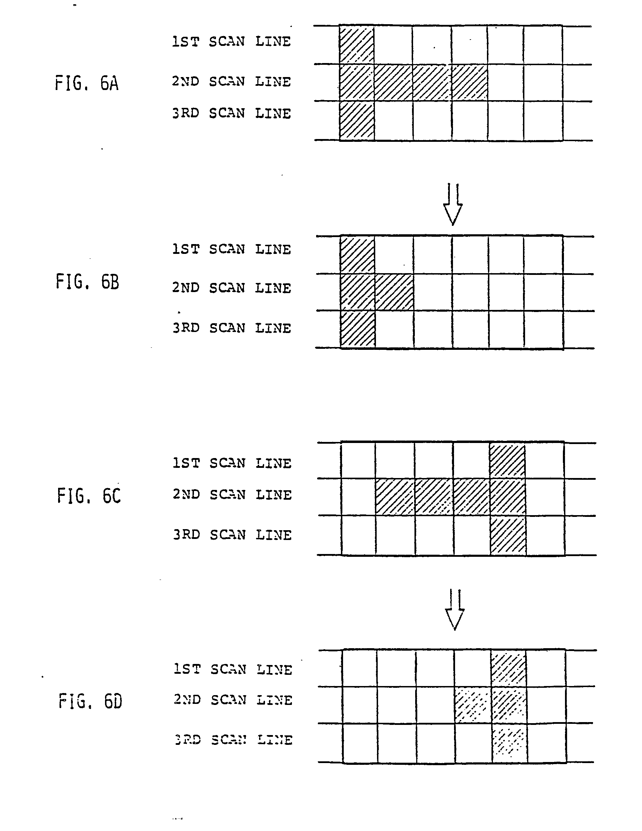

The Figs. 4A and 4C show the case of $\Delta_{12} = 1$ and $\Delta_{23} = 1$, the Figs. 5A and 5C show the case of $\Delta_{12} = 2$ and $\Delta_{23} = 2$, and the Figs. 6A and 6C show the case of $\Delta_{12} = 3$ and $\Delta_{23} = 3$. The image data or bit pattern of Fig. 4A is converted to that shown in Fig. 4B by the aforementioned operation of block 8, and similarly the conversion from Fig. 4C to Fig. 4D, from Fig. 5A to Fig. 5B, from Fig. 5C to Fig. 5D, from Fig. 6A to Fig. 6B and from Fig. 6C to Fig. 6D are performed by said block 8.

Fig. 7 shows a circuit block diagram of an apparatus according to the invention for performing the operations shown in Fig. 1 and described with respect to the examples of Figs. 3A through 6D.

The 3 pel × 3 pel window 71 samples or picks up each 3 × 3 square array of image bits in a document image. The exemplary resolution is 8 pels/mm in the horizontal direction and 8 scan lines/mm in the vertical direction.

The bit conversion or the pre-process of the original image data in accordance with the present invention, as shown in the Figs. 3A through 6D, is performed by a conversion table 73. The bit pattern for each 3 × 3 window is applied as an address to the conversion table storage means 73 through a pattern register 72 to fetch a desired output bit pattern on an output line 74 or a control signal "Pattern Save" on a control line 77. The pattern register 72 stores the bit pattern of a single 3 × 3 window 71 or the bit patterns of plural 3 × 3 windows 71 in response to the Pattern Save signal from the conversion table 73.

Examples of the addresses and the stored bit patterns in the conversion table 73 are shown in the following Table 3.

Table 3

| Entry No. | Address | | Bit Pattern | |
|---|---|---|---|---|
| 1 | 100110100 | (FIG. 4A) | 100100100 | (FIG. 4B) |
| 2 | 001011001000000000 | (FIG. 4C) | 001001001000000000 | (FIG. 4D) |
| 3 | 100111100000000000 | (FIG. 5A) | 100110100000000000 | (FIG. 5B) |
| 4 | 000011000100100100 | (FIG. 5C) | 000001000100100100 | (FIG. 5D) |
| 5 | 100111100000100000 | (FIG. 6A) | 100110100000000000 | (FIG. 6B) |
| 6 | 000011000010110010 | (FIG. 6C) | 000000000010110010 | (FIG. 6D) |
| 7 | 100111111000110111000000 111000000100 | (FIG. 3A) | 100111111000100111000000 111000000100 | (FIG. 3B) |
| . | . | | . | |
| . | . | | . | |
| . | . | | . | |
| n–6 | 001011001 | | 111111111 | |
| n–5 | 100111100 | | 111111111 | |
| n–4 | 001111001 | | 111111111 | |
| n–3 | 000111000 | | 111111111 | |
| n–2 | 100111111 | | 111111111 | |
| n–1 | 100111111000110111 | | 111111111 | |
| n | 100111111000110111000000111 | | 111111111 | |

For example, let it be assumed that the 3 × 3 window 71 samples the bit pattern shown in Fig. 4A. The bit pattern "100" of the first scan line, "110" of the second scan line and "100" of the third scan line are concatenated, or serially conenicted to "100110100", and this concatenated bit pattern is stored in the pattern register 72, and then supplied to the conversion table means 73. Referring to Table 3, at exemplary entry No. 1, the conversion table 73 has the above address and generates the output pattern "100100100". The output pattern "100100100" is supplied to the 3 line buffer 76 through an output line 74 and a gate 75. The gate 75 operates to assemble the serial output bit pattern "100100100" to the three line pattern shown in Fig. 4B. Thus, the input bit pattern of Fig. 4A has been converted to the bit pattern of Fig. 4B.

The remaining entries 2 through 7 of Table 3 show the addresses and output bit patterns for Figs. 4C through 6D and Figs. 3A and 3B.

It is noted that in the cases of Figs. 4C, 5A, 5C, 6A and 6C, the bit pattern enclosed by two windows 71 is used as a single address, and in the case of Fig. 3A, the bit pattern enclosed by four windows 71 is used as a single address. The reasons for the use of plural windows for forming a single address, will now be described. First referring to Fig. 4A, its bit pattern has all "0" bits in the third column, in other words, the boundaries from black to white for all scan lines are found in this single window. In contradistinction, the first 3 × 3 window of Fig. 4C does not include the black to white boundaries for all scan lines within it, so it can not be determined whether the black pels or elements continue into the subsequent window, or not. Accordingly, the second window is joined to the first window. The second window contains all "0" bits in the third column, whereby the black to white boundaries for all lines exist within the first and second windows.

To control the joinder of the subsequent window to the preceding window(s), the conversion table 73 generates the control signal "Pattern Save" on the control line 77 when a pattern, which does not include black to white boundaries for all lines, is applied to the table 73. The Pattern Save signal has a unique pattern, e.g. "111111111", which can be distinguished from all other output bit patterns, as shown in the entries n-6 through n in Table 3. For the case of Fig. 4C, the generation of the Pattern Save output is shown in entry n-6 of Table 3.

As a further example, in the process of the bit pattern of Fig. 3A, the supply of the bit pattern of the first 3 × 3 window to the conversion table 73 produces the Pattern Save output "111111111" causes a signal on the control line 77, as indicated in the entry n-2, and no output pattern is supplied to the output line 74. The Pattern Save signal applied to the pattern register 72 causes the bit pattern of the second window to be subsequently stored, concatenated to the bit pattern of the first window, in the pattern register 72. Now, the combined bit pattern of the first and second window is applied to the conversion table 73 as a single address, as indicated in the entry n-1, and a Pattern Save signal is produced on the line 77 again. In response to the Pattern Save signal, the pattern register 72 stores the bit pattern of the third window along with the first and second bit patterns. The combined bit pattern is supplied to the conversion table 73, which generates the Pattern Save signal on the line 77, as shown in the entry n of Table 3, Then, the pattern register 72 stores the bit pattern of the fourth window also, and the combined bit pattern of the first through fourth windows is applied to the conversion table 73, as indicated in the entry 7 of Table 3, which produces the bit patern corresponding to that of Fig. 3B on the output line 74. Thus, the output bit pattern stored in the 3-line buffer 76 through the gate 75 represents the bit pattern of Fig. 3B.

The bit pattern in the 3-line buffer 76, which has been pre-processed in accordance with the present invention, is supplied to the conventional compression device 78, in Fig. 7, which compresses the bit pattern from the 3-line buffer 76 in accordance with the two-dimensional coding scheme of the CCITT Recommendation T.4, for example.

Description of a Second Embodiment

The Figs. 8 through 10 show a second embodiment of the present invention. In this embodiment, the 2 pel × 4 pel window 81 shown in Fig. 8 samples or picks up each array of 2 × 4 image bits in the document image 82. The start position of the 2 × 4 pel window is at the upper left corner of the document image 82, i.e. pels $L_1C_1$—$L_1C_4$ and $L_2C_1$—$L_2C_4$. The 2 × 4 pel window 81 progessively moves or shifts towards the right-most pel position $C_n$.

When the 2 × 4 window 81 after having started from the upper left-most pel positions, i.e., the said $L_1C_1$—$L_1C_4$ and $L_2C_1$—$L_2C_4$, reaches the right edge of the scan lines $L_1$ and $L_2$, the 2 × 4 window 81 returns to the next start position $L_2C_1$—$L_2C_4$ and $L_3C_1$—$L_3C_4$, and scans this next couple of scan lines $L_2$ and $L_3$. As the 2 × 4 pel windows 81 scans the document image 82, the pel conversion shown in Fig. 9 is performed. One example of the conversion is shown in Figs. 8 and 10. Figure 10(A) shows a first step in which the bi-level image data of scan lines $L_1$ and $L_2$ are fetched into an input buffer, not shown. Then, the 2 × 4 pel window is sequentially moved from the first pel $C_1$ to the last pel $C_n$. During each shift of the sequential movement, 8 pels within the 2 × 4 pel window 81 are inspected as to whether the 8 pels match with one of the patterns 1 through 4 of Fig. 9. If Yes, the 8 pels are replaced by one of the patterns 11 through 14. If No, the conversion or replacement is not made, that is, the original pels are not changed. The fetch of the 2 × 4 pels and the comparison of the 2 × 4 pels with the patterns 1—4 in Fig. 9 could be performed by a similar circuit arrangement as the pattern register 72 and the conversion table means 73 in Fig. 7.

A match to the pattern 1 is found for the pels $L_1C_3$—$L_1C_6$ and $L_2C_3$—$L_2C_6$, and these eight pels are replaced by the pattern 11. This replaced pattern 11 is shown by the solid line 101 in FIG. 10(B). The next match is found at pels $L_1C_9$—$L_1C_{12}$ and $L_2C_9$—$L_2C_{12}$, since these eight pels match with the pattern 3 in Fig. 9. Thus, the eight pels are replaced by the pattern 13 in Fig. 9. This replacement is shown by solid line 102. Thereby, the pre-process of the scan lines $L_1$ and $L_2$ has been completed, as shown in Fig. 10(B), and the first scan line $L_1'$ is stored in the first line $L_1'$ of an output buffer, as shown in Fig. 10(E). In the next step, shown in Fig. 10(C), the second line $L_2'$ of Fig. 10(B) and the third scan line $L_3$ of the original image data of Fig. 8 are combined and loaded into the input buffer. The $2 \times 4$ pel window moves again from the left end $C_1$ to the last pel on the right $C_n$. When the $2 \times 4$ pel window 81 reaches the eight pels $L_2'C_9$—$L_2'C_{12}$ and $L_3C_9$—$L_3C_{12}$, these eight pels match with the pattern 4 of Fig. 9, and therefore these eight pels are replaced by the pattern 4 of Fig. 9. This conversion is shown by solid line 103 in Fig. 10(D). Thereby, the pre-process of the scan lines $L_2'$ and $L_3$ in Fig. 10(C) has been completed, and the scan line $L_2''$ of Fig. 10 (D) is stored in the scan line $L_3''$ of the output buffer as shown in Fig. 10(E).

The next step loads the scan line $L_3'$ of Fig. 10(D) and the scan line $L_4$ of Fig. 8 into the input buffer.

Again, the $2 \times 8$ pel group is sequentially shifted and compared with the patterns 1 through 4, and if a match is found, the eight pel group is replaced by one of the patterns 11 through 14, and the resulting scan line $L_3''$ is stored into the output buffer, as shown in Fig. 10(E).

The bit pattern in the output buffer is supplied to the compression device which compresses the bit pattern of the output buffer, in accordance with the two-dimensional coding scheme of the CCITT Recommendation T.4, for example.

In the preceding specification, the pre-process in the horizontal direction was described. But, the pre-process in accordance with the present invention could be used just as well to pre-process bi-level image data in the vertical direction. In the pre-process operation in the vertical direction, a changing element in each column in the vertical direction is detected, and the step is performed which determines whether a distance between the changing element in a first column and a changing element in a second column is falling within a predetermined range. Further, similar operational steps as the steps in the described embodiments are performed to pre-process the bi-level image data in the vertical direction.

The embodiments were directed to pre-process the black pels in the data. But, the invention could also be used to pre-process image patterns which are reversed patterns of the patterns shown in Figs. 4A, 4C, 5A, 5C, 6A, 6C and the patterns 1—4 in Fig. 9. In this case, the white pels are treated as the foreground pels and the black pels are treated as background pels.

It has been shown that the invention provides for the pre-processing of image data, which improves the efficiency of subsequent data compression. In other words, the invention reduces the data amount of the compressed data.

## Claims

1. A method for processing binary image data supplied from an image supply means in preparation for compression under a two-dimensional coding scheme, comprising the steps of:

a) scanning the image data by a moving window comprising predefined numbers of k picture elements (pels) in an image line (k columns) and l lines,

b) detecting transitions between runs of elements of different binary values,

c) measuring the absolute value of the distance between the transitions in subsequent lines or columns in the window,

d) re-arranging said image data to selectively decrease said distance to a predetermined value, if said distance is smaller than a first predetermined distance value X, whereby the total number of pels in each line of the window remains unchanged, and

e) supplying said re-arranged image data to a compression means for performing said compression.

2. The method according to claim 1 wherein $l = 3$, comprising the steps of:

a) detecting a first transition in the image data in a first scan line, a second transition in the image data in a second scan line and a third transition in the image data in a third scan line,

b) measuring a first distance ($\Delta_{12}$) between said first transition and said second transition and a second distance ($\Delta_{23}$) between said second and said third transition,

c) re-arranging said image data to selectively decrease the smaller one of said first or second distances to a first predetermined value, if at least one distance is smaller than or equal to a second predetermined distance value which is larger than said first predetermined value and smaller than said first predetermined distance value X,

d) re-arranging said image data to reduce the smaller of said distances of said distances to said second predetermined distance value, if both distances are between said second predetermined distance value and said first predetermined distance value.

3. The method of claim 2 wherein said second predetermined distance value equals 3.

4. The method of claim 2 wherein said first predetermined value is 0, if either said first or said second distance is 1, and is 1, if either said first or said second distance is 2 or 3.

5. The method of claim 2, wherein $k = 3$ and $l = 3$.

6. The method according to claim 1, wherein $k = 4$ and $l = 2$.

7. An apparatus for performing the method of one or more of the preceding claims, with means for storing a window of the scanned image data, characterized by

— a pattern register (72, Fig. 7) storing one or more windows and generating a concatenated uni-dimensional bit pattern,

— a conversion table storage means (73) being addressed by said uni-dimensional bit pattern and delivering a re-arranged unidimensional output bit pattern (74).

— a gate (75) and a line buffer (76) assembling said output bit pattern into lines for delivery to a compression device (78).

— said conversion table storage means including means for delivering a Pattern Safe Signal (77) to said pattern register, if said uni-dimensional bit pattern, i.e. said window of image bits, does not include transitions for all lines of the window, whereupon said pattern register will save said inspected window and will admit a further window to supplement said uni-dimensional bit pattern into an enlarged pattern for renewed addressing of said conversion table.

8. The method of claim 7 further comprising means to cause output of an unchanged bit pattern or part thereof from said conversion table storage means (73) if said stored pattern in said pattern register (72) is not accepted as a suitable pattern for rearrangement, whereupon further bits from said input data buffer are shifted into said address register in a manner to scan the inspection window a step further along said plurality of stored image lines.


**Patentansprüche**

1. Verfahren zum Bearbeiten binärer von einer Bildversorgung gelieferter Bilddaten zur Vorbereitung des Komprimierens gemäß einem zweidimensionalen Codierungsschema, folgende Schritte umfassend:

a) Abtasten der Bilddaten durch ein sich bewegendes Fenster mit einer vordefinierten Anzahl von k Bildelementen in einer Bildzeile (k Spalten) und l Zeilen,

b) Erkennen von Übergangen zwischen Abfolgen von Elementen unterschiedlicher binärer Werte,

c) Messen des absoluten Wertes der Distanz zwischen den Übergängen in aufeinanderfolgenden Zeilen oder Spalten im Fenster,

d) Neuordnen der Bilddaten zum selektiven Verringern der Distanz auf einen bestimmten Wert, wenn diese Distanz geringer ist als ein erster bestimmter Distanzwert X, wobei die Gesamtzahl von Bildelementen in jeder Zeile des Fensters unverändert bleibt, und

e) Beaufschlagen von Komprimierungsmitteln mit den neu geordneten Daten zum Ausführen des Komprimierens.

2. Verfahren nach Anspruch 1, wobei l = 3 ist, folgende Schritte umfassend:

a) Erkennen eines ersten Übergangs in den Bilddaten in einer ersten Abtastzeile, eines zweiten Übergangs in den Bilddaten in einer zweiten Abtastzeile, und eines dritten Übergangs in der Bilddaten in einer dritten Abtastzeile,

b) Messen einer ersten Distanz ($\Delta_{12}$) zwischen dem ersten und dem zweiten Übergang, und einer zweiten Distanz ($\Delta_{23}$) zwischen dem zweiten und dem dritten Übergang,

c) Neuordnen der Bilddaten zum selektiven Verringern der kleineren der ersten und zweiten Distanzen auf einen ersten bestimmten Wert, wenn wenigstens eine Distanz kleiner oder gleich einem zweiten bestimmten Distanzwert ist, welcher größer ist als der erste bestimmte Wert und kleiner als der erste bestimmte Distanzwert X,

d) Neuordnen der Bilddaten zum Verringern der kleineren der Distanzen auf den zweiten bestimmten Distanzwert, wenn beide Distanzen zwischen dem zweiten und dem ersten bestimmten Distanzwert liegen.

3. Verfahren nach Anspruch 2, bei welchem der zweite bestimmte Distanzwert gleich 3 ist.

4. Verfahren nach Anspruch 2, bei welchem der erste bestimmte Wert 0 ist, wenn entweder die erste oder die zweite Distanz 1 ist, oder 1, wenn entweder die erste oder die zweite Distanz 2 oder 3 ist.

5. Verfahren nach Anspruch 2, bei welchem k = 3 und l = 3 ist.

6. Verfahren nach Anspruch 1, bei welchem k = 4 und l = 2 ist.

7. Anordnung zum Ausführen des Verfahrens nach einem oder mehreren der vorhergehenden Ansprüche, mit Mitteln zum Speichern eines Fensters der abgetasteten Bilddaten, gekennzeichnet durch

— ein Musterregister (72, Fig. 7) zum Speichern von einem oder mehreren Fenstern und zum Erzeugen eines zusammenhängenden eindimensionalen Bitmusters,

— einen Umwandlungstabellenspeicher (73), der von dem eindimensionalen Bitmuster beaufschlagt wird und ein neugeordnetes eindimensionales Ausgangsbitmuster (74) liefert,

— ein Gate (75) und einen Zeilenspeicher (76), welcher das Ausgangsbitmuster in Zeilen ansammelt, um es in eine Kompressionsvorrichtung (78) einzugeben,

— wobei der Umwandlungstabellenspeicher Mittel zum Abgeben eines Muster-Sicher-Signals (77) an das Musterregister enthält, wenn das eindimensionale Bitmuster, d.h. das Fenster von Bildbits keine Übergänge für alle Zeilen des Fensters enthält,

worauf das Musterregister das untersuchte Fenster sichert und ein weiteres Fenster zuläßt, um das eindimensionale Bitmuster in ein vergrößertes Muster zum erneuten Adressieren der Umwandlungstabelle zu ergänzen.

8. Verfahren nach Anspruch 7, weiterhin Mittel enthaltend zum Auslesen eines unveränderten Bitmusters oder eines Teils hiervon aus dem Umwandlungsspeicher (73), wenn das gespeicherte Muster im Musterregister (72) nicht als passendes Muster zum Neuordnen akzeptiert wird, worauf weitere Bits vom Eingangsdatenpuffer so in das Adreßregister gebracht werden, daß das Prüffenster um einen weiteren Schritt entlang der Anzahl von gespeicherten Bildzeilen abgetastet wird.

**Revendications**

1. Procédé pour traiter des données binaires d'image envoyées par des moyens d'alimentation d'images à titre de préparation en vue d'une compression selon un système de codage bidimensionnel, incluant les étapes consistant à:

a) explorer par balayage les données d'image en déplaçant une fenêtre comportant des nombres préalablement définis de k éléments d'image dans une ligne de l'image (k colonnes) et l lignes,

b) détecter des transitions entre des groupes d'éléments possédant des valeurs binaires différentes,

c) mesurer la valeur absolue de la distance entre les transitions dans des lignes ou des colonnes ultérieures dans la fenêtre,

d) réarranger lesdites données d'image pour réduire de façon sélective ladite distance à une valeur prédéterminée, si cette distance est inférieure à une première valeur de distance prédéterminée X, le nombre total des éléments d'image dans chaque ligne de la fenêtre resistant inchangé, et

e) envoyer lesdites données d'image réarrangées à des moyens de compression pour réaliser ladite compression.

2. Procédé selon la revendication 1, selon lequel l = 3, incluant les étapes consistant à:

a) détecter une première transition dans les données d'image dans une première ligne de balayage, une seconde transition dans les données d'image dans une seconde ligne de balayage et une troisième transition dans les données d'image dans une troisième ligne de balayage,

b) mesurer une première distance ($\Delta_{12}$) entre ladite première transition et ladite seconde transition et une seconde distance ($\Delta_{23}$) entre ladite seconde transition et ladite troisième transition,

c) réarranger lesdites données d'image pour réduire de façon sélective la plus petite desdites première ou seconde distance à une première valeur prédéterminée, si au moins l'une de ces distances est inférieure ou égale à une seconde valeur de distance prédéterminée, qui est supérieure à ladite première valeur prédéterminée et inférieure à ladite première valeur de distance prédéterminée X,

d) réarranger lesdites données de manière à réduire la plus petite desdites distances à ladite seconde valeur de distance prédéterminée, si les deux distances se situent entre ladite seconde valeur de distance prédéterminée et ladite première valeur de distance prédéterminée.

3. Procédé selon la revendication 2, dans lequel ladite seconde valeur de distance pédéterminée est égale à 3.

4. Procédé selon la revendication 2, selon lequel ladite première valeur prédéterminée est 0, si l'une ou l'autre de ladite première ou seconde distance est 1, et est 1, si l'une ou l'autre de ladite première ou seconde distance est 2 ou 3.

5. Procédé selon la revendication 2, selon lequel k = 3 et l = 3.

6. Procédé selon la revendication 3, selon lequel k = 4 et l = 2.

7. Dispositif pour la mise en oeuvre du procédé selon une ou plusieurs des revendications précédentes, comportant des moyens pour mémoriser une fenêtre des données d'image explorées par balayage, caractérisé par

— un registre de profils (72, figure 7) mémorisant une ou plusieurs fenêtres et produisant un profil binaire unidimensionnel enchaîné,

— des moyens (73) de mémorisation d'une table de conversion addréssés par ledit profil binaire unidimensional et délivrant un profil binaire unidimensionnel de sortie réarrangé (74).

— une porte (75) et un tampon de lignes (76) assemblant ledit profil binaire de sortie selon des lignes pour son envoi à un dispositif de compression (78),

— lesdits moyens de mémorisation de la table de conversion incluant des moyens pour délivrer un signal de sauvegarde de profil (77) audit registre de profils, si ledit profil binaire unidimensionnel, c'est-à-dire ladite fenêtre des bits de l'image, ne contient pas des transitions pour toutes les lignes de la fenêtre, auquel cas ledit registre de profils conserve ladite fenêtre inspectée et admet une autre fenêtre pour compléter ledit profil binaire unidimensionnel pour former un profil élargiservant à réaliser un adressage renouvelé de ladite table de conversion.

8. Procédé selon la revendication 7, comportant en outre des moyens pour déclencher la délivrance d'une profil binaire inchangé ou d'une partie de ce profil à partir desdits moyens (73) de mèmorisation de la table de conversion, si ledit profil binaire situé dans ledit registre de profils (72) n'est pas accepté en tant que profil convenant pour le réarrangement, auquel cas des bits supplémentaires délivrés par ledit tampon de données d'entrée sont transférés dans ledit registre d'adresses de manière à explorer par balayage la fenêtre d'inspection sur un pas supplémentaire le long de ladite pluralité de lignes d'image mémorisées.

START —1

STORE
3 SCAN LINES —2

DETECT
BOUNDARY 31 —3

DETECT BOUNDARY
32 AND Δ12 —4

DETECT BOUNDARY
33 AND Δ23 —5

$3 < |\Delta 12| < x$
AND $3 < |\Delta 23| < x$ —6

N

Y

$|\Delta 12| > |\Delta 23|$ —7

N

Y

REDUCE Δ12 OR Δ23
BASED ON TABLE 2 —8

RE-ARRANGE DATA
TO REDUCE Δ23 TO
3 —9

RE-ARRANGE DATA
TO REDUCE Δ12 TO
3 —10

COMPRESS DATA —11

END —12

FIG. 1

REFERENCE LINE

CODING LINE

FIG. 2

FIG. 3A

1ST SCAN LINE

2ND SCAN LINE

3RD SCAN LINE

FIG. 3B

FIG. 4A

1ST SCAN LINE

2ND SCAN LINE

3RD SCAN LINE

FIG. 4B

1ST SCAN LINE

2ND SCAN LINE

3RD SCAN LINE

FIG. 4C

1ST SCAN LINE

2ST SCAN LINE

3RD SCAN LINE

FIG. 4D

1ST SCAN LINE

2ND SCAN LINE

3RD SCAN LINE

3

FIG. 5A

FIG. 5B

FIG. 5C

FIG. 5D

FIG. 6A

1ST SCAN LINE

2ND SCAN LINE

3RD SCAN LINE

FIG. 6B

1ST SCAN LINE

2ND SCAN LINE

3RD SCAN LINE

FIG. 6C

1ST SCAN LINE

2ND SCAN LINE

3RD SCAN LINE

FIG. 6D

1ST SCAN LINE

2ND SCAN LINE

3RD SCAN LINE

FIG. 7

FIG. 8

FIG. 9

FIG. 10